# EUROPEAN PATENT SPECIFICATION

(11) **EP 1 606 330 B1**
(45) Date of publication and mention of the grant of the patent: **17.12.2008**
(21) Application number: 04758303.4
(22) Date of filing: 25.03.2004
(51) Int. Cl.: C08F 292/00, C09D 151/10, C09D 7/12, C09D 5/03

(54) **POWDER COATING COMPOSITION COMPRISING A POLYMER FORMED FROM POLYMERISABLE MODIFIED PARTICLES**
PULVERLACK ENTHALTEND EIN POLYMER DAS AUS POLYMERISIERBAREN MODIFIZIERTEN TEILCHEN HERGESTELLT IST
COMPOSITION DE PEINTURE POUDRE COMPRENANT UN POLYMERE OBTENU A PARTIR DE PARTICULES MODIFIEES POLYMERISABLES

(30) Priority: 27.03.2003 US 400955
(43) Date of publication of application: 21.12.2005
(73) Proprietor: PPG Industries Ohio, Inc., Cleveland, OH 44111 (US)
(72) Inventor: WHITE, Daniela, Pittsburgh, PA 15237 (US); EISAMAN, Heather, L., Pittsburgh, PA 15221 (US); SCHNEIDER, John, R., Glenshaw, PA 15116 (US)
(74) Representative: Polypatent
(86) International application number: PCT/US2004/009094
(87) International publication number: WO 2004/087778

(56) References cited:
- WO-A-84/00375
- WO-A-03/087236
- DE-A- 19 533 057
- US-A- 5 280 054
- US-A- 6 160 067

## Description

### FIELD OF THE INVENTION

The present invention relates to powder coating compositions that provide improved mar and/or scratch resistance and to methods for using the same. More specifically, the improved resistance is achieved by use of a polymer that includes a monomer formed from a particle and modifying group.

### BACKGROUND OF THE INVENTION

"Color-plus-clear" coating systems involving the application of a colored or pigmented basecoat to a substrate followed by application of a transparent or clear topcoat over the basecoat have become increasingly popular as original finishes for a number of consumer products including, for example, cars and floor coverings such as ceramic tiles and wood flooring. The color plus-clear coating systems have outstanding appearance properties, including gloss and distinctness of image, due in large part to the clear coat.

"One coat" systems comprising a one coat color layer are applied themselves as the topcoat. One coat systems are frequently used for household appliances, lawn and garden equipment, interior fixtures, and the like.

In recent years, powder coatings have become increasingly popular; because these coatings are inherently low in volatile organic content (VOC), their use significantly reduces air emissions during the application and curing processes.

Liquid coatings are used in many systems, particularly those wherein solvent emissions are permitted. For example, the coating of elastomeric automotive parts is often done by spraying liquid compositions. Many of these compositions are formulated to be flexible so the coating can bend or flex with the substrate without cracking. Because these coatings can result in films that are softer, they may be more susceptible to marring and scratching.

Topcoat film-forming compositions, such as the protective and/or decorative one coats for household appliances and the transparent clearcoat in color-plus-clear coating systems for automotive applications; are subject to defects that occur during the assembly process and damage from both the environment and normal use of the end product. Paint defects that occur during assembly include the paint layer being too thick or too thin, "fish eyes" or craters, and under-cured or over-cured paint; these defects can affect the color, brittleness, solvent resistance and mar and scratch performance of the coating. Marring and/or scratching can also occur during assembly due to handling of the parts, and particularly during transit of the parts to the assembly plant. Damaging environmental factors include acidic precipitation, exposure to ultraviolet radiation from sunlight, high relative humidity and high temperatures; these factors can also result in compromised performance. Normal use of consumer products will often lead to marring, scratching and/or chipping of the surface due to contact with hard objects, contact with brushes and/or abrasive cleansers during normal cleaning processes, and the like.

Thus, there is a need in the coatings art for topcoats having good scratch and mar resistance, including those in which flexibility would also be desired.

### SUMMARY OF THE INVENTION

The present invention is directed to
a powder coating composition comprising a film forming resin comprising a polymer formed from reactants comprising:
(a) a chemically modified particle comprising:
   i) a particle having a functional group, and
   ii) a modifying group reacted with the functional group of the particle, wherein the modifying group has at least one ethylenically unsaturated moiety; and
   (b) at least one additional monomer comprising a functional group that is polymerizable with the ethylenically unsaturated moiety of the modified particle of component a), wherein
the chemically modified particle (a) has less than 1.0 mmol of reactive unsaturation per gram of particle.

Particles containing at least one reactive group on their surface are suitable for modification, which is effected by the addition of a moiety comprising ethylenic unsaturation. The modified particle can then be polymerized with one or more additional monomers having groups that will react with the ethylenic unsaturation of the modified particle. In this manner, the modified particle functions as a "monomer" itself, and the modified particles are sometimes referred to as "monomers" herein. The reaction between the present modified particle monomer and any other monomers can therefore be thought of in the same way as any other polymerization between monomers. The resulting polymer is suitable for use in a film-forming resin, such as those used in coating formulations. In some embodiments, polymers incorporating the present modified particle monomers will rise to the surface of the cured coating, thus affording enhanced mar and/or scratch resistance. In other embodiments, the polymers incorporating the present modified particles will be dispersed throughout the coating layer, enhanced mar and/or scratch resistance is also observed in this embodiment.

The particles are typically organic or inorganic particles, or mixtures thereof, and can have an average particle size in the nanometer or micron range. Methods for using compositions comprising modified particles are also within the scope of the invention, as are substrates coated according to these methods.

It has been surprisingly discovered that the polymerization of the present modified particles with other monomers used in film-forming resins results in coatings having enhanced mar and/or scratch resistance as compared with the same coatings lacking these particles. According to the present invention, coatings can be formulated with these improved mar and/or scratch characteristics without adversely affecting the appearance, viscosity or other mechanical properties of the coatings. The incorporation of particles into coatings has been historically difficult to achieve because of, among other things, incompatibility of the particles and the resins. Thus, the present invention provides a unique way to incorporate particles into a resin without experiencing such things as settling, incompatibility, gelling or particle agglomeration often seen with other formulations known in the art.

"Mar" and "scratch" refer herein to physical deformations resulting from mechanical or chemical abrasion. "Mar resistance" is a measure of a material's ability to resist appearance degradation caused by small scale mechanical stress. "Scratch resistance" is the ability of a material to resist more severe damage that can lead to more visible, deeper or wider trenches. Thus, scratches are generally regarded as being more severe than what is referred to in the art as mar, and the two are regarded in the art as being different. As noted above, mar and scratch can result from manufacturing and environmental factors as well as through normal use. Although mar and scratch are in many respects just differing degrees of the same thing, a coating that improves mar resistance may not be effective in improving scratch resistance, and vice versa. It will be appreciated, therefore, that combinations of particles and other additives can be employed to give the final coating its desired characteristics.

### DESCRIPTION OF THE INVENTION

The present invention is directed to a powder coating composition comprising a polymer formed from chemically modified particles having ungelling levels of reactive unsaturation comprising a particle having a functional group that is reacted with a modifying group. The modifying group is one that has ethylenic unsaturation. It will be appreciated that the addition of the ethylenically unsaturated moiety to the particle is what introduces unsaturation to the modified particle (monomer). The level of unsaturation introduced according to the present invention is such that when the monomer is further polymerized with other monomers, gelation of the polymer does not occur; this is referred to herein as "ungelling levels of reactive unsaturation". For example, an ungelling level of reactive unsaturation in the present monomers can be less than 1.0 mmol of reactive unsaturation/gram of particle, such as less than 0.5 mmol/g or 0.2 mmol/g or less.

Any combination of organic or inorganic particles having a functional group can be reacted with the modifying group of the present invention. Examples of particles include but are not limited to silica; various forms of alumina; alumina silicate; silica alumina; alkali aluminosilicate; borosilicate glass; oxides including titanium dioxide and zinc oxide; quartz; and zircon such as in the form of zirconium oxide. Particles that do not have an active site can be activated by reacting the particles with water. In the reaction with water, the Si-O-Si bonds on the particle surface will break and, upon the addition of the water molecule, two Si-OH groups will be formed. Examples of particles that need to be activated include nitrides, including boron nitride and silicon nitride; nepheline syenite; buddeluyite; and eudialyte. Mixtures of any of the above particles can be used. In one embodiment, the particles comprise only one kind of metal oxide.

The silica can be in any suitable form, such as crystalline, amorphous, fused, or precipitated. A silica particle having one or more surface silanol groups is particularly suitable for use in the present invention. For example, the silica particles can have between about 0.5, and 4 mmol surface OH/g of particles.

Alumina can be used in any of its forms, such as alpha, beta, gamma, delta, theta, tabular alumina, and the like. Fused or calcined alumina, including ground or unground calcined alumina, can also be used, but will typically require activation with water first.

The particles listed above are widely commercially available. For example, crystalline silica is available from Reade Advanced Materials; amorphous and precipitated silica from PPG Industries, Inc.; ZEEOSPHERES, silica alumina ceramic alloy particles, from 3M Corporation; colloidal silica from Nissan Chemicals; silica alumina, such as G200, G-400, . G-600, from 3M Corporation; alkali alumina silicate, such as W-210, W-410, and W-610, from 3M Corporation; borosilicate glass, sold as SUNSPHERES, from MoSci Corporation; and quartz and nepheline syenite from Unimin, Inc. Other alumina products are available from Micro Abrasives Corporation as WCA3, WCA3S, and WCA3TO, and from Alcoa as TE4-20. Zircon, buddeluyite and eudialyte are commercially available from Aran Isles Corporation, and boron nitride is available from Carborundum Inc. as SHP-605 and HPP-325. It will be appreciated that many commercially, available products are actually composites or alloys of one or more materials; such particles are equally within the scope of the present invention.

There are treated particles reported in the art in which the particle is "associated with" one or more coupling agents that affect the properties of the particle. In contrast, the particles used according to the present invention are actually chemically modified by their reaction with a compound having an ethylenically unsaturated moiety; "chemically modified" refers to this reaction. This compound chemically attaches to the surface of the particle by reacting with one or more of the functional groups on the particle. The chemical modifications made to particles according to the present invention will be irreversible.This is another distinction over modified particles known in the art, whose modifying moieties can subsequently be removed from the particles during normal use. In addition, the modified particles of the present invention can be formulated to retain their quality as individual particles, that is, they do not clump or agglomerate after modification when formulated into a liquid coating.

Some of the particles that can be modified according to the present invention already contain some form of surface treatment applied by the supplier. Examples include MIBK-ST, which is a colloidal silica in MIBK solvent, and MEK-ST, a colloidal silica in MEK solvent, both of which are commercially available from Nissan. Such particles can still be further modified according to the present invention.

The terms "modifying group" and "modifying compound" are used herein to refer to compounds having at least one ethylenically unsaturated moiety and a group that will react with the functional group of the particle.

These compounds can have the general Formula 1:

F-L-Z (1)

wherein F is the moiety containing one or more functional groups that will react with the particle surface, Z is a moiety having ethylenic unsaturation, and L is a group that links F and Z. Ethylenic unsaturation can be polymerized through radical polymerization, anionic polymerization, or cationic polymerization. Thus, the addition of the "Z" moiety to the particle renders the particle capable of polymerization with another suitable monomer, or. "polymerizable".

Any compounds having one or more polymerizable ethylenically unsaturated bondings customarily used in the preparation of acrylic resin for coatings may be used according to the present invention as "Z", provided the compound is capable of reacting with "L" such that that can be linked to"F". Examples include but are not limited to:
alkyl acrylates or methacrylates, such as methyl acrylate, methyl methacrylate, ethyl acrylate, ethyl methacrylate, n-butyl acrylate, n-butyl methacrylate, 2-ethylhexyl acrylate and the like;
polymerizable aromatic compounds, such as styrene; α-methyl styrene, vinyl toluene, t-butyl styrene and the like;
vinyl compounds, such as vinyl acetate, vinyl propionate, vinyl chloride, vinylidene chloride and the like;
α-olefins, such as ethylene, propylene and the like;
diene compounds, such as butadiene, isoprene and the like;
carboxyl group-containing monomers, such as acrylic acid, methacrylic acid, crotonic acid, itaconic acid, maleic acid, fumaric acid and the like;
hydroxyl group-containing monomers, such as 2-hydroxyethyl acrylate, hydroxypropyl acrylate, 2-hydroxyethyl methacrylate, hydroxypropyl methacrylate, hydroxybutyl acrylate, hydroxybutyl methacrylate, allyl alcohol; methallyl alcohol and the like;
polymerizable nitriles, such as acrylonitrile, methacrylonitrile and the like;
nitrogen-containing alkyl acrylates and methacrylates, such as dimethylaminoethyl acrylate, dimethylaminoethyl methacrylate and the like; and
polymerizable amides, such as acrylamide, methacrylamide and the like.

Specific examples of suitable ethylenic unsaturation are groups containing (meth)acrylate, styrene, vinylether, vinyl ester, N-substituted acrylamide, N-vinyl amide, maleate esters, and fumarate esters. "(Meth)acrylate" refers to both methacrylate and acrylate.

Examples of compounds within general Formula 1 that can be reacted with the present particles to render them polymerizable can be represented by Formula 2:

Si(OR)₃-(CH₂)ₙ-Z (2)

wherein R is an alkyl moiety having 1 to 30 carbons, such as 1 or 2 carbon, Z is, as above, a moiety that contains ethylenic unsaturation, and n is 0-5. In comparing Formula 1 to Formula 2, F would be represented by Si(OR)₃, L would be represented by (CH₂)ₙ and Z would, of course, be Z. "Alkyl" refers herein to carbon-containing groups having the specified number of carbon atoms, which groups can be cyclic or aliphatic, branched or linear, substituted or unsubstituted, saturated or unsaturated. When compounds having Formula 2 are prepared using hydrosilylation techniques, such as those described herein, "n" will generally be 2 or 3. It will be appreciated that at least one of the alkoxy groups attached to the Si molecule reacts with a functional group on the surface of the particle; in the case of silica particles, the alkoxy group reacts with a silanol group on the particle surface.

The Z moiety can be introduced to the particle in any manner known in the art. For example, the Z moiety may be part of a compound that, by itself, reacts with the particle, (i.e. contains an F or F/L moiety) such as a compound that contains a trialkoxy silane. Alternatively, a compound containing a Z moiety can be reacted with another compound that contains an F moiety. This can be done by any means known in the art, by selecting the appropriate L moiety to bring together the F and Z moieties. For example, a trialkoxy silane wherein the fourth substituent has a first functional group can be reacted with a compound containing both a "Z" moiety and a second functional group; the first and second functional groups are selected so as to be reactive with each other. Upon reaction, the F and Z moieties are united. Any pair of functional groups can be used. For example, if one functional group is an epoxy, the other can be an amine, a carboxylic acid or a hydroxy; if one functional group is an amine, the other can be an epoxy, isocyanate or carboxylic acid; if one functional group is an isocyanate, the other can be an gamine or hydroxy; and if one functional group is an acrylate, the other can be an amine. A specific example includes a glycidyl trialkoxy silane with acrylic acid. A particularly suitable modifying compound is (meth)acryloxy propyltrialkoxy silane. In this compound, for example, F is trialkoxysilane, L is -(CH₂)₃-, and Z is (meth)acrylate.

The modification of the present particles is performed by means standard in the art. If the particles do not have surface functionality, they are first treated with a small amount of water (i.e. about 1 %) to activate the surface by formation of Si-OH groups on surface. The small amount of waster used in the treatment will react with the particle and there will be substantially no water left. The particles having surface functional groups are reacted with the one or more "F" containing compounds at slightly elevated temperatures (i.e. about 60°C) in the presence of a catalyst, such as dibutyltinlaurate, for at least about two hours. Typically, between about 0.1 and 5.0 weight percent of catalyst is added, such as 1 percent. Alternatively, the particles and F containing compound(s) can be admixed with a small amount of water and warmed at elevated temperatures (such as about 120°F) oversight (such as 14 plus hours). Generally, a relative small percent, such as about 5 to 10 percent, or less than .10 percent, of the surface functional groups on the particle will react with the F containing compound. "F containing compound" refers to a compound having at least the "F" moiety, although it can also have the L moiety, or the L and Z moieties, depending on how the reaction is performed. For example, an F or F-L containing compound can be reacted first with the particle, with the L-Z or Z containing compound added later. Alternatively, the F-L-Z compound can be reacted directly with the particle.

Regardless of how the reaction is carried out, the result will be the addition of the modifying compound to the particle. The modifying compound will typically be added in amounts of 5 weight percent, 2 weight percent or even lower, with weight percent being based on the total weight of the silica. Such amounts of modifying compound will provide the monomer with "ungelling levels of reactive unsaturation". Thus, when the monomer is further reacted with other monomers or polymers, gelation will not occur. In contrast, if gelling levels of reactive unsaturation (i.e. greater than 1 mmol/g silica) were to be attached to the particle(s), the resulting monomer, when further polymerized, will result in of gelled product: Because there would be so much reactive unsaturation attached to those particles, a high degree of crosslinking would occur during polymerization thereby resulting in a gel. While this is desired for some applications, such as when a "hard coat" is desired, it would not be desired for many applications contemplated by then present invention. High levels of reactive unsaturation that lead to gelling are observed, for Example, by reacting a large amount of modifying groups to a particles, such as by using greater than 10 wight percent of modifying compound, and/or by using modifying compounds having multiply points of ethylenic unsaturation In one embodiment of the present invention, the modifying group reacted with the particle has mono ethylenic unsaturation, to further ensure that a "nongelling'" modified particle is the results.

In addition to being "nongelling", the level of reactive unsaturation of the present monomer is so low that crosslinking of the monomers, either with each other or with other monomers or polymers, will generally not occur. Again, such crosslinking is desired in some technologies where high amounts of reactive ethylenic unsaturation are used or where particles are admixed, versus reacted with, monomers or reactive polymers having ethylenic unsaturation; in such products a high degree of crosslinking, such as that initiated by exposure to UV light, is the goal.

Following reaction between the particle and modifying compound, the modified particle monomer should be stabilized through the addition of a stabilizing compound. The stabilizing compound is one that will prevent agglomeration of the functional groups on the particle that are not reacted with the modifying compound. Agglomeration occurs when the nonreacted functional groups of one particle associate with the nonreacted functional groups on one or more other particles. The stabilizing compound prevents or at least minimizes this agglomeration by reducing the number of functional groups on the surface of the particle. Particularly suitable stabilizing agents are those that generate trialkylsilyl groups. It will be appreciated that the stabilizing compound, can introduce ethylenic unsaturation to the composition, but such ethylenic unsaturation is not reactive; that is, the ethylenic unsaturation will not undergo a reaction with other monomers or polymers.

Any nonreactive ethylenic unsaturation introduced via the stabilizing compound, or through any other means, is therefore specifically excluded from the "level of reactive unsaturation" values discussed above. Typically, the stabilizing agent will be present in an amount of 5 to 20 weight percent, the particle in an amount of 75 to 94 weight percent, and the modifying compound in an amount of 1 to 5 weight percent, with weight percent, being based on the total weight of the stabilizing agent, particle and modifying compound, In a particularly suitable embodiment, the stabilizing agent comprises about 15 weight percent, the particle about 83 weight percent, and the modifying compound about 2 weight percent.

As noted above, one result of the present modification is to convert a particle into a monomer. This is done by attaching to a particle a modifying group that can undergo polymerization with one or more other monomers. As noted above, a relatively small percent of the functional groups of the particle will be reacted with the modifying group. As such, the particle monomers will not contain enough ethylenic unsaturation to undergo a crosslinking reaction with other like particle monomers, and the particle monomers would not be capable of undergoing UV cure with themselves. Thus, the present particle monomers are distinct from particles taught in the art that are reacted with enough acrylate functionality to make the particles crosslink with themselves and form a network. Often, these particles are further crosslinked with other acrylate resins into which they are placed. The present invention is also distinct from art that teaches the mixing of particles with ethylenically unsaturated compounds and the curing of those compounds; there, the ethylenic unsaturation crosslinks to form a network and the particle will be held in the network. This again is distinct from the present invention in which the modified polymer "monomers" are polymerized, rather than crosslinked, with one or more other monomer.

The present invention is directed to a powder coating composition comprising a polymer comprising at least one modified particle monomer and at least one additional monomer. The additional monomer can be any monomer known in the art that will undergo polymerization with an ethylenically unsaturated moiety. Examples include but are not limited to monomers (or polymers comprised of such monomers) that contain (meth)acrylate groups, including but not limited to alkyl (meth)acrylates, such as methyl (meth)acrylate, ethyl (meth)acrylate, n-butyl (meth)acrylate, isobutyl (meth)acrylate, isobornyl (meth)acrylate, and 2-ethylhexyl (meth)acrylate; polymerizable aromatics, such as styrene; carboxyl-containing monomers such as (meth)acrylic acid; hydroxyl-containing monomers such as hydroxyethyl (meth)acrylate, hydroxypropyl (meth)acrylate, hydroxybutyl (meth)acrylate, and allyl (meth)acrylate; and amino functional alkyl acrylates such as dimethylalminoethyl (meth)acrytate.

The polymer can comprise anywhere from 1 to 75 weight percent of the modified particle. The amount of particle desired may depend on the needs of the user and can be adjusted by using more or less of the present monomer particle in formulating the polymers.

Any method for polymerizing monomers can be used to prepare the polymers of the present invention, such as standard radical polymerization. It will be appreciated that a linear, rather than a branched, polymer will result. The polymers are typically suitable for incorporation in the film-forming resins used for either powder or liquid coating.

The "monomerization" of the present particles and their subsequent polymerization with other monomers or polymers allows particles to be introduced to coatings in a stable manner. That is, the Particles will not be subject to settling, incompatibility, agglomeration and like problems often seen when particles are incorporated into coatings using other art-described method, nor will the coatings undergo the gelation that will occur with certain other methods. In some embodiments, such as when surface-active monomers are used, the whole polymer may migrate to the surface region of the coating and remain there after cure. In other embodiments, for example when using an acrylic functional polymer such as those typically used for refinish applications, the present polymer may be both at the surface region and throughout the bulk region. In some embodiments, therefore, the surface region of the cured coating will have a higher concentration of particles than will the bulk region of the cured composition. In other embodiments, the particles will be more evenly dispersed throughout the surface region and bulk region; in this embodiment, it will be understood that a portion of the modified particles may have migrated to the surface. In addition, when preparing the modified particle monomer of the present invention, there will be some particles that do not react within the modifying compound. These particles will be more hydrophobic than the rest of the composition, which will cause them to migrate to the surface of the coating. Sanding and buffing of the cured coasting, such as that done in the refinish industry, will typically remove much of this top layer comprising unreacted particles. According to the present invention, mar and/or scratch resistance can still be retained because particles may still be dispersed throughout the coating even after this top layer is removed.

The present polymers find particular application as part of film-forming resins used in the formation of powder coatings. Accordingly, the present invention is directed to a powder coating composition comprising a film-forming resin, wherein the film-forming resin comprises a polymer as discussed above. Coatings are generally applied to a substrate and then cured. A "cured coating" or a "cured composition" will be understood as one in which the components react with each other so as to resist melting upon heating. The "surface region" of a cured coating is used herein to refer to the top quarter of a coating, In contrast, the "bulk region" of the cured composition refers to that portion below the surface region, extending from the interface with the surface region to the substrate or to the next layer of coating beneath the cured coating, generally about three quarters of the total coating thickness. Accordingly, the present invention is further directed to a powder coating composition comprising a film-forming resin, wherein the film-forming resins comprises a polymer as defined above.

The concentration of polymers comprising the particles can be determined, for example, by a variety of surface analysis techniques well known in the art, such as Transmission Electron Microscopy ("TEM"), Surface Scanning Electron Microscopy ("X-SEM"), Atomic Force Microscopy ("AFM"), and X-ray Photoelectron Spectroscopy, the use of which will be familiar to one skilled in the art. It will be apparent when looking, for example, at a micrograph of the present coatings, where at least some of the particles are located in the coating layer.

The particles used in the present invention can have an average particle size ranging in the nanometer to microrange. "Nanoparticles" can be used in a size range of between about 2.0 and 500 nanometers, such as between about 5 and 200 nm. "Microparticles" can be used in a size range of between about 0.5 and 50 microns, such as greater than 1 micron to 30 microns, 0.5 to 10 microns or 0.5 to 5 microns. Any of the particles listed above can be used in any size within these ranges according to the present invention.

Particle size can be determined according to any method known in the art, such as by a conventional particle size analyzer. For example, where the average particle size is greater than 1 micron, laser scattering techniques can be employed, and for average particle sizes smaller than 1 micron, TEM can be used.

The shape or morphology of the particles can vary depending on the type of particle or particles selected. For example, generally spherical particles, such as crystalline materials, solid beads, microbeads, or hollow spheres, can be used, as can particles that are platy, cubic or acicular (that is, elongated or fibrous). The particles can also have a random or nonuniform morphology. In addition, the particles can have an internal structure that is hollow, porous or void free, or any combination, such as a hollow center with porous or solid walls. It will be appreciated that for certain applications, one particle shape may be more suitable than others. Particle shape may be irrelevant, however, for other applications. It will be appreciated that combinations of particles having different morphologies can be used to give the desired characteristics to the final coating.

Combinations of particles can also be used to impart the desired level of mar and/or scratch resistance to a coating. For example, nanosized particles that are particularly good for imparting mar resistance and microparticles that are particularly good for imparting scratch resistance can be combined. To determine whether improved mar and scratch resistance is obtained with a particular particle or combination of particles, two coating compositions can be formulated, with the only difference being that the resin of one contains the present modified particles as part of the polymer and the resin of the other does not. The coatings can be tested for mar and scratch resistance (i.e. "mar and/or scratch testing") by any means standardly known in the art, such as those described in the Example section below. The results for the particle-containing and nonparticle-containing compositions can be compared to determine whether improved resistance is obtained when the selected particles are added. Even a small improvement in any of these tests constitutes an improvement according to the invention. The present coating compositions, when cured, will have greater mar and/or scratch resistance than their particle-lacking counterparts. Gloss retention percentages of 20 percent or greater, 50 percent or greater, or even 70 percent or greater can be achieved according to the present invention.

The polymers of the present invention are typically incorporated into the present coatings such that the particle concentration in the coatings is from 0.01 to 30.0 weight percent, such as from 5 to 20 weight percent, or about 10 to 15 weight percent, where weight percent is based on total solid weight of the coating composition. For powder coatings, the amount will typically be from 0.01 to 30.0 weight percent, such as 5 to 20 weight percent, or 10 to 15 weight percent, again with weight percent being based on total solid weight of the coating; and for liquid coatings the amount will typically be from 0.01 to 40.0 weight percent, such as 5 to 20 weight percent, or 10 to 15 weight percent, with weight percent being based on total solid weight of the coatings. It will be appreciated that improvement in mar and scratch resistance will increase as the concentration of particles increases. The tests described in the Example section below can be used by those skilled in the art to determine what weight percent or "load" of particles will give the desired level of protection.

Both the size of the particles used as well as the particle load can affect not only the level of mar and/or scratch resistance but also the appearance of the cured coating. Thus, particle size and load should be optimised by the user based on the particular application, taking into account, for example, the level of acceptable haze, the level of mar and/or scratch resistance, the thickness of the coating and the like. Where appearance is particularly relevant such as in an automotive clear coat, a relatively low load and/or smaller particle size can be used. For industrial one-coat systems where haze is not as relevant, or where pigments are present, loadings of up to about 10 percent or even higher can be used, as can particle sizes of 10 microns or even larger. One skilled in the art can optimize particle size and load to achieve the desired level of mar and/or scratch resistance without compromising the appearance or other mechanical properties of the cured coatings. Mixtures of particles having different sizes may be particularly suitable for a given application.

As noted above, the polymers comprising the modified particle monomers of the present invention can be part of a film-forming resin and can be used in powder coatings. The film-forming resin can further comprise one or more monomers and/or polymers not within the present invention, depending on the needs and desires of the user. Any resin that forms a film can be used according to the present invention, absent compatibility problems. A particularly suitable resin for use in the present coating compositions is one formed from the reaction of a polymer having at least one type of reactive functional group and a curing agent having functional groups reactive with the functional group of the polymer.

The polymers particularly suitable for powder compositions can be, for example, acrylic, polyester, polyether or polyurethane, and can contain functional groups such as hydroxyl, carboxylic acid, carbamate, isocyanate, epoxy, amide and carboxylate functional groups. Such functionality can therefore be introduced to the polymers formed according to the present invention. The use in powder coatings of acrylic, polyester, polyether and polyurethane polymers having hydroxyl functionality is known in the art. Monomers for the synthesis of such polymers are typically chosen so that the resulting polymers have a glass transition temperature ("Tg") greater than 40°C. Examples of such polymers are described in U.S. Patent No. 5,646,228 at column 5, line 1 to column 8, line 7.

Acrylic polymers and polyester polymers having carboxylic acid functionality are also suitable for powder coatings. Monomers for the synthesis of acrylic polymers having carboxylic acid functionality are typicaly chosen such that the resulting acrylic polymer has a Tg greater than 40°C, and for the synthesis of the polyester polymers having carboxylic acid functionality such that the resulting polyester polymer has a Tg greater than 50°C. Examples of carboxylic acid group-containing acrylic polymers are described in U.S. Patent No. 5,214,101 at column 2, line 59 to column 3, line 23. Examples of carboxylic acid group - containing polyester polymers are described in U.S. Patent No. 4,801,680 at column 5, lines 38 to 65.

The carboxylic acid group-containing acrylic polymers can further contain a second carboxylic acid group-containing material selected from the class of C₄ to C₂₀ aliphatic dicarboxylic acids, polymeric polyanhydrides, low molecular weight polyesters having an acid equivalent weight from about 150 to about 750, and mixtures thereof. This material is crystalline and is preferably a low molecular weight crystalline or glassy carboxylic acid group-containing polyester.

Also useful in the present powder coating compositions are acrylic, polyester and polyurethane polymers containing carbamate functional groups. Examples are described in WO Publication No. 94/10213. Monomers for the synthesis of such polymers are typically chosen so that the resulting polymer has a high Tg, that is, a Tg greater than 40°C. The Tg of the polymers described above can be determined by differential scanning calorimetry (DSC).

Suitable curing agents generally include blocked isocyanates, polyepoxides, polyacids, polyols, anhydrides, polyamines, aminoplasts and phenoplasts. The appropriate curing agent can be selected by one skilled in the art depending on the polymer used. For example, blocked isocyanates are suitable curing agents for hydroxy and primary and/or secondary amino group-containing materials. Examples of blocked isocyanates are those described in U.S. Patent No. 4,988,793, column 3, lines 1 to 36. Polyepoxides suitable for use as curing agents for COOH functional group-containing material are described in U.S Patent No. 4,681,811 at column 5, lines 33 to 58. Polyacids as curing agents for epoxy functional group-containing materials are described in U.S. Patent No. 4,681,811 at column 6, line 45 to column 9, line 54. Polyols, materials having an average of two or more hydroxyl groups per molecule can be used as curing agents for NCO functional group-containing materials and anhydrides, and are well known in the art. Polyols for use in the present invention are typically selected such that the resultant material has a Tg greater than about 50°C.

Anhydrides as curing agents for epoxy functional group-containing materials include, for example, trimellitic anhydride, benzophenone tetracarboxylic dianhydride, pyromellitic dianhydride, tetrahydrophthalic anhydride, and the like as described in U.S. Patent No. 5,472,649 at column 4, lines 49 to 52. Aminoplasts as curing agents for hydroxy, COOH arid carbamate functional group-containing materials are well known in the art. Examples of such curing agents include aldehyde condensates of glycoluril, which give high melting crystalline products useful in powder coatings. While the aldehyde used is typically formaldehyde, other aldehydes such as acetaldehyde, crotonaldehyde, and benzaldehyde can be used.

The film-forming resin described above is generally present in the present powder coating compositions in an amount greater than about 50 weight percent, such as greater than about 60 weight percent, and less than or equal to 95 weight percent, with weight percent being based on the total weight of the composition. For example, the weight percent of resin can be between 50 and 95 weight percent. At least some if not all of these weight percents will be comprised of the present polymers. When a curing agent is used, it is generally present in an amount of up to 50 weight percent; this weight percent is also based on the total weight of the coating composition.

The powder coating compositions of the present invention may optionally contain additives such as waxes for flow and wetting, flow control agents, such as poly(2-ethylhexyl)acrylate, degassing additives such as benzoin and MicroWax C. adjuvant resin to modify and optimize coating properties, antioxidants, ultraviolet (UV) light absorbers and catalysts. Examples of useful antioxidants and UV light absorbers include those available commercially from Ciba-Geigy under the trademarks IRGANOX and TINUVIN. These optional additives, when used, are typically present in amounts up to 20 percent by weight, based on total weight of the coating.

The polymers of the present invention can be added at any appropriate time during the formulation of the coating, such as whenever any of the other film-forming resins are or would be added. The appropriate time can vary depending on such parameters as the type of polymer, the type of coating and the other formulation additives. One skilled in the art of coating formulation can determine how and when to add the present polymers based on these parameters.

The powder coating compositions are most often applied by spraying, and in the case of a metal substrate, by electrostatic spraying, or by the use of a fluidized bed. The powder coating can be applied in a single sweep or in several passes to provide a film having a thickness after cure of from 25.4-254 µm (1 to 10 mils) usually 50.8-101.6 µm (2 to 4 mils). Other standard methods for coating application can be employed such as brushing, dipping or flowing.

Generally, after application of the powder coating composition, the coated substrate is baked at a temperature sufficient to cure the coating. Metallic substrates with powder coatings are typically cured at a temperature ranging from 110°C-343°C (230°F to 650°F) for 30 seconds to 30 minutes.

It will be appreciated that in any of the polymers or coatings, of the present invention, the ethylenic unsaturation from the modified particle monomer will no longer be present, or if present not in easily detectable amounts. This is because it will have reacted with another monomer or polymer to polymerize with that monomer or polymer. Thus, the ethylenic unsaturation from the modified particle plays no role in the curing of the coatings incorporating the present polymers.

The coating compositions of the invention can be applied to a variety of substrates, for example automotive substrates such as fenders, hoods, doors and bumpers, and industrial substrates such as household appliances, including washer and dryer panels and lids, refrigerator doors and side panels, lighting fixtures and metal office furniture. Such automotive and industrial substrates can be metallic, for example, aluminum and steel substrates, and non-metallic, for example, thermoplastic or thermoset (i.e. "polymeric") substrates, including, for example, transparent plastic substrates, polycarbonate, polymethyl methacrylate and elastomeric substrates such as thermoplastic polyolefin. Wood substrates are also suitable for coating with the present compositions.

The coating compositions of the invention are particularly useful as top coats and/or clear coats in color-clear composite coatings. The compositions of the invention in the pigmented form can be applied directly to a substrate to form a color coat. Alternately, the coating composition of the invention can be unpigmented, in the form of a clearcoat for application over a color coat (either a primer coat or a colored topcoat). When used as a color topcoat, coating thicknesses of 12.7-127 µm (0.5 to 5.0 mils) are usual, and when used as a clearcoat, coating thicknesses of 25.4-101.6 µm (1.0 to 4.0 mils) are generally used.

Accordingly, the present invention is further directed to a substrate coated with one or more of the present compositions. The substrates and compositions, and manner of applying the same, are as described above.

The present invention is further directed to a multi-layer composite coating composition comprising a base coat deposited from a film-forming composition and a topcoat applied over at least a portion of the base coat, where the topcoat is deposited from any of the coating compositions of the present invention. The base coat might have a cured film thickness between 12.7-101.6 µm (0.5 and 4 mils) while the topcoat cured film thickness can be up to 25.4 µm (10 mils). The base coat can be cured before application of the topcoat, or the two coats can be cured together. In one example, the base coat can be deposited from a pigmented film-forming composition, while the topcoat formed from the present compositions is substantially transparent. This is the color-plus-clear system discussed above, frequently used in automotive applications. In another example, more than one of the layers can contain the particles of the present invention.

In yet another embodiment, the present invention is directed to a method for improving the mar and/or scratch resistance of a coated substrate comprising applying the present compositions to at least a portion of the substrate. Application can be by any means known in the art to the thicknesses described above.

The coatings formed according to the present invention, when cured, can have outstanding appearance properties and scratch and mar resistance properties as compared to similar coatings in which no particles are incorporated.

As used herein, unless otherwise expressly specified, all numbers such as those expressing values, ranges, amounts or percentages may be read as if prefaced by the word "about", even if the term does not expressly appear. Also, any numerical range recited herein is intended to include all sub-ranges subsumed therein. Plural encompasses singular and vice versa. As used herein, the term "polymer" refers to oligomers and both homopolymers and copolymers, and the prefix "poly" refers to two or more.

### EXAMPLES

The following examples are intended to illustrate the invention, and should not be construed as limiting the invention in any way.

For all of the Examples, unless otherwise note, 20° gloss was measured with a handheld 20° NOVO-GLOSS 20 statistical glossmeter, available from Gardener Instrument Company, Inc.

1,2, and 9µ 3M Abrasive Paper Scratch Resistance ("1, 2 or 9µ Paper") was performed using an Atlas AATCC Mar Tester Model CM-5, available from Atlas Electrical Devices Co. of Chicago, Illinois. A 2" x 2" piece of the 3M Abrasive Paper backed with the felt cloth was clamped to the acrylic finger on the arm of the instrument, and a set of 10 double rubs (unless indicated otherwise) was run on each panel. The panel was then rinsed with cool tap water and dried. Scratch resistance was expressed as the percentage of the 20° gloss that was retained after the surface was scratched by the scratch tester. Scratch resistance was measured as: Percent Scratch Resistance = (Scratched Gloss + Original Gloss) x 100.

Gloss was measured using the BYK/Haze Gloss Instrument following manufacturer's instructions.

Steel wool tests were also performed using the Atlas Tester ("steel wool") in the same manner as the scratch tests only using 2" x 2" piece of the 0000# grade steel wool sheet backed with the felt cloth.

The Amtec Kistler Car Wash Test was performed by first applying and curing a colored coat and a clear coat to steel substrate panels. The panels were placed in the Amtec car wash machine from Amtec Kistler, Germany, which simulates car wash machines used in Europe. A moving platform transported the panels under a rotating polyethylene brush (two passes under the brush = one cycle) while a water/quartz meal mixture (silicon dioxide or quartz, 1.5 grams per liter) was sprayed at the panels. Twenty degree gloss meter readings were recorded before and after the test.

### Example 1

Particles were modified according to the present invention, using the components listed in Table 1.

Particles 1 and 4 were prepared as follows: Charge 1 was added to a jar followed by Charge 2: The solution was stirred in a 60°C oil bath for 60 minute; Charge 3 was added and the solution was stirred for another 30 minutes.

Particle 3 was prepared as follows: Charge 1 was added to a jar followed by Charge 2. The solution was stirred in a 60°C oil bath for four hours.

Particles 2 and 5 were prepared as follows: Charge 1 was added to a jar and stirred at room temperature until homogeneous. Charge 2 was added and the solution was stirred in a 60°C oil bath for four hours.

Particle 6 was prepared as follows: Charge 1 was added to a 4-neck flask equipped with a water cooled reflux condenser, thermocouple and air driven stirred. Charge 2 was added to a jar and stirred until homogeneous. pH was checked with litmus paper and adjusted to pH of 5 with glacial acetic acid. Solution was stirred until it was haze free. Charge 2 was then added to Charge 1 through an addition funnel over 5 minutes with stirring. The solution was stirred for one hour at room temperature before Charge 3 was added over 5 minutes. The solution was stirred for another hour. Charge 4 was added and the solution was stirred for an additional 30 minutes at room temperature. The solution was then heated to 90°C and vacuum stripped to 25 percent solids.

**Table 1**

| Charge | Particle 1 | Particle 2 | Particle 3 | Particle 4 | Particle 5 | Particle 6 |
|---|---|---|---|---|---|---|
| 1 | 1130 g MIBK-ST silica¹ | 100 g GORESIL 210⁵ 200 g MIBK⁶ | 425 g MIBK-ST silica | 807 g MIBK-ST silica | 37.8 g Alumina⁷ 340 g MIBK | 1250 g SNOW TEX O silica⁸ |
| 2 | 6.8g A-174² | 5g A-174 | 6.4 g A-174 | 4.8 g A-174 | 0.756 g A-174 | 5 g A-174⁹ in |
| | | | | | | 120 g Deionized water |
| | 4.1 g DBTDL³ | 1.2 g DBTDL 1.5 g | DBTDL | 2.9 g DBTDL | 2.9 g DBTDL | |
| 3 | 16.95g HMDZ⁴ | -- | -- | 19.6gHMDZ | -- | 50gA-171 |
| 4 | -- | -- | -- | -- | -- | 1000g |
| | | | | | | Butyl cellosolve |

| | | | | | | |
|---|---|---|---|---|---|---|
| ¹MIBK-ST is silica in methyl isobutyl ketone from Nissan Chemical. ²A-174 is methacryloxypropyltrimethoxysilane from OSI Specialties ³ DBTDL is dibutyltin dilaurate from Atofina Chemicals. ⁴HMDZ is hexamethyldisilizane from Aldrich Corporation. ⁵ GORESIL 210 is silica, average particle size is 2 microns, from C.E.D. Processed Minerals. ⁶ methyl isobutyl ketone. ⁷Alumina is aluminum silicate from Nanophase Technologies Corporation. ⁸ SNOW TEX O is silica in water from Nissan Chemical. ⁹A-171 is vinyltrimethoxysilane from Crompton Corporation. | | | | | | |

The particles modified as described were then incorporated into polymers using the components listed in Table 2.

Polymer 1 was prepared as follows: Charge 1 was added to a 4-neck flask equipped with a water-cooled reflux condenser, thermocouple and air driven stirrer and heated to reflux with stirring. Charges 2 and 3 were prepared and stirred until homogeneous. Charges 2 and 3 were then added dropwise through addition funnels to the flask over a period of three hours. Reflux was maintained. Charge 4 was prepared and added over 5 minutes immediately after the completion of Charges 2 and 3. The solution was shirred at reflux for 1 hour. Charge 5 was prepared and added dropwise over 5 minutes. The solution was stirred for another 1.5 hours. Conversion was measured by GC. The temperature was increased to 140°C and the polymer was vacuum stripped to >99 percent solids.

Polymers 2-5 were prepared as follows: Charge 1 was added to a 4-nick flask equipped with a water-cooled reflux condenser, thermocouple and air driven stirrer. The solution was heated to 90°C and stirred for 2 hours. Charge 2 was then added dropwise through an addition funnel to the flask over a period of 2 hours. Temperature was maintained around 90°C until conversion by GC was >90 percent.

Polymer 6 was prepared as follows: Resin was prepared as described above in Example 1 except resin solution was subsequently cooled to RT after stirring for 1.5 hours and conversion was >90 percent.

**Table 2**

| | Polymer 1 | Polymer 2 | Polymer 3 | Polymer 4 | Polymer 5 | Polymer 6 |
|---|---|---|---|---|---|---|
| Charge 1 | 200 g butyl | 90 g VAZO 67 | 90 g VAZO 67 | 90 g VAZO 67 | 90 g VAZO 67 | 150 g MIBK |
| | acetate | 125 g Solvent¹⁷ | 132 g Solvent | 150 g Solvent | 225 g Solvent | |
| | | 375 g MIBK | 375 g MIBK | 200 g MIBK | 225 g MIBK | |
| Charge 2 | 32 g VAZO | 104 g HEMA¹³ | 96 g HEMA | 82.5 g | 100 g HEMA | 55 g |
| | 67¹⁰ | 97 g IBOMA | 71.2 g IBOMA | HEMA | 75 g IBOMA | VAZO 67 |
| | 160 g butyl | 45 g Styrene | 23 g Styrene | 52.5 g IBOMA | 37.5 g Styrene | 175 g MIBK |
| | acetate | 80 g Silica | 211 g Silica | 15.4 g | 379 g Alumina | |
| | | 15 g methyl | 15 g methyl | Styrene | 13 g methyl | |
| | | styrene dimer | styrene dimer | 500 g Silica | styrene dimer | |
| | | | | 15 g methyl styrene dimer | | |
| Charge 3 | 169 g | -- | -- | -- | -- | 218 g HPA¹⁴ |
| | IBOMA¹¹ | | | | | 218 g EHA¹⁵ |
| | 12 260 g GMA¹² | | | | | 109 g ACE¹⁶ |
| | 32.5 g Styrene | | | | | 273 g Styrene |
| | 542 g silica | | | | | 1249 g Silica |
| Charge 4 | 2 g VAZO | -- | -- | -- | -- | 2 g VAZO 67 |
| | 10 g butyl acetate | | | | | 10 g MIBK |
| Charge 5 | 2 g VAZO 67 | -- | -- | -- | -- | 2 g VAZO 67 |
| | 10 g butyl acetate | | | | | 10 g MIBK |

| | | | | | | |
|---|---|---|---|---|---|---|
| ¹⁰ VAZO 67 is 2,2'-(2-methylbutyronitrile) from Dow Chemical. ¹¹IBOMA is isobornyl methacrylate. ¹² GMA is glycidyl methacrylate. ¹³HEMA is hydroxyethyl methacrylate. ¹⁴HPA is hydroxypropyl acrylate. ¹⁵ EHA is ethylhexyl acrylate. ¹⁶ACE is acrylic acid/ cardura E (product of glycidyl neodecanoate + acrylic acid). ¹⁷ DOWANOL PM from Dow Chemical. | | | | | | |

### Example 2

Glycidyl methacrylate ("GMA") acrylic clear coat compositions identified as Samples 1 to 4 in Table 3 were prepared using the components and amounts (in grams) shown, and processed in the following manner. The components were blended in a Prism Blender for 15 to 30 seconds. The mixtures were then extruded through a Werner & Pfleider co-rotating twin screw extruder at a 450 RPM screw speed and an extrudate temperature of 100°C to 125°C. The extruded material was then ground to a particle size of 20 to 35 microns using an ACM Grinder (Air Classifying Mill from Micron Powder Systems, Summit, New Jersey). Cold rolled steel test panels were coated with PPG Black Electrocoat primer ED5051 and fully cured; the panels were obtained from ACT Laboratories The finished powders were electrostatically sprayed onto test panels and evaluated for coatings properties as further indicated in the Table.

**Table 3**

| | Sample 1 | Sample 2 | Sample 3 | Sample 4 |
|---|---|---|---|---|
| Almatex PD-9060¹⁸ | 313 | 313 | 144.5 | 144.5 |
| DDDA¹⁹ | 68.8 | 68.8 | 68.8 | 68.8 |
| Polymer 1 | -- | -- | 168.5 | 168.5 |
| Microgrit WCA 3²⁰ | -- | 0.4 | -- | 0.4 |
| Benzoin²¹ | 1.5 | 1.5 | 1.5 | 1.5 |
| Triphenyl Tin Hydroxide²² | 3.9 | 3.9 | 3.9 | 3.9 |
| Modaflow²³ | 3.6 | 3.6 | 3.6 | 3.6 |
| Total | 393.0 | 393.4 | 392.9 | 393.4 |
| % silica | -- | 00 | 10.7% | 10.7% |
| % alumina | -- | 0.1% | -- | 0.1% |
| Initial gloss | 85.1 | 84.6 | 81.9 | 82.5 |
| 9 µm paper (% retention) | 12.6% | 34.9% | 45.3% | 61.0% |
| 3 µm paper (% retention) | 23.7% | 56.5% | 70.6% | 77.8% |
| 2 µm paper (% retention) | 69.3% | 84.8% | 89.7% | 93.6% |
| Steel wool (% retention) | 26.0% | 68.2% | 62.0% | 70.7% |

| | | | | |
|---|---|---|---|---|
| ¹⁸40% GMA acrylic, commercially available from Anderson Development. ¹⁹ Dodecanedioic acid, commercially available from DuPont Chemicals. ²⁰ Calcined alumina, median particle size 2.85 - 3.71µ, commercially available from Micro Abrasive Corporation. ²¹Degasser. ²²Catalyst commercially available from Atofina Chemicals. ²³An acrylic copolymer flow additive/anti-crater, commercially available from Solutia, Inc. | | | | |

As illustrated in Table 3, Sample 3, which included the polymer of the present invention, had greatly enhanced gloss retention as compared with Sample 1, which had no particles added, and also gave overall better gloss retention than Sample 2, which had alumina particles admixed into the coating but not incorporated into the polymer. Sample 4, combining the present polymer and additional particles, had even greater gloss retention.

## Claims

1. A powder coating composition comprising a film forming resin comprising a polymer formed from reactants comprising:
(a) a chemically modified particle comprising:
i) a particle having a functional group, and
ii) a modifying group reacted with the functional group of the particle, wherein the modifying group has at least one ethylenically unsaturated moiety; and
(b) at least one additional monomer comprising a functional group that is polymerizable with the ethylenically unsaturated moiety of the modified particle of component a), wherein
the chemically modified particle (a) has less than 1.0 mmol of reactive unsaturation per gram of particle.

2. The powder coating composition of Claim 1, wherein the ethylenically unsaturated moiety is derived from acrylate or methacrylate.

3. The powder coating composition of Claim 1, wherein the modifying group has one ethylenically unsaturated moiety.

4. The powder coating composition of Claim 1, wherein the modifying group has the structure :
F-L-Z
wherein F comprises a functional group reactive with the functional group on the particle; Z comprises an ethylenically unsaturated moiety; and L is a group that links F and Z.

5. The powder coating composition of Claim 4, wherein F is Si (OR)₃-; L is - (CH₃)ₙ -; R is an alkyl group having 1 to 30 carbons; and n is 0 to 5.

6. The powder coating composition of Claim 5, wherein Z comprised acrylate, or methacrylate functionality.

7. The powder coating composition of Claim 6, wherein the modifying compound is (meth)acryloxy propyl trialkoxy silane.

8. The powder coating composition of Claim 7, wherein the trialkoxy is trimethoxy.

9. The powder coating composition of claim 1, wherein less than 10 percent of the functional groups on the particle are reacted with modifying groups.

10. The powder coating composition of Claim 1, wherein the particle is a silica particle.

11. The powder coating composition according to any of claims 1-10, wherein (a) further comprises a stabilizing agent.

12. The powder coating compositions of Claim 11, wherein the stabilizing agent comprises 5 to 20 weight percent of the composition, the particle comprises 75 to 94 weight percent of the composition and the modifying compound comprises 1 to 5 weight percent of the composition with weight percent being based on the total weight of the composition.

13. The powder coating composition of Claim 1, wherein the additional monomer is styrene.

14. The powder coating composition of claim 1, wherein the additional monomer is isobornyl methacrylate.

15. The powder coating composition of Claim 1, wherein said polymer is an acrylic polyol.

16. The powder coating composition of Claim 1, wherein the weight percent of the particle in the coating is 0.01 to 30.0, with weight percent being based on total solid weight of the coating.

17. A substrate coated with the powder coating composition of Claim 16.

18. The substrate of Claim 17, wherein said substrate is metallic.

19. The substrate of Claim 17, wherein said substrate is polymeric.

20. The substrate of Claim 17, wherein one or more additional layers are disposed between the substrate and the coating.

21. A method for improving scratch and/or mar resistance of a coated substrate comprising applying as at least one of the coatings the coating composition of Claim 1 to at least a portion of the substrate.

## Patentansprüche

1. Pulverbeschichtungszusammensetzung, enthaltend ein filmbildendes Harz, das ein Polymer enthält, das aus Reaktanten, enthaltend:
(a) ein chemisch modifiziertes Teilchen, enthaltend:
i) ein Teilchen mit einer funktionellen Gruppe und
ii) eine modifizierende Gruppe, die mit der funktionellen Gruppe des Teilchens umgesetzt ist, wobei die modifizierende Gruppe wenigstens eine ethylenisch ungesättigte Einheit aufweist, und
(b) wenigstens ein zusätzliches Monomer, das eine funktionelle Gruppe enthält, die mit der ethylenisch ungesättigten Einheit des modifizierten Teilchens der Komponente (a) polymerisierbar ist,
wobei das chemisch modifizierte Teilchen (a) weniger als 1,0 mmol reaktive Ungesättigtheit pro g Teilchen aufweist, gebildet wird.

2. Pulverbeschichtungszusammensetzung nach Anspruch 1, wobei die ethylenisch ungesättigte Einheit sich von Acrylat oder Methacrylat ableitet.

3. Pulverbeschichtungszusammensetzung nach Anspruch 1, wobei die modifizierende Gruppe genau eine ethylenisch ungesättigte Einheit aufweist.

4. Pulverbeschichtungszusammensetzung nach Anspruch 1, wobei die modifizierende Gruppe die Struktur:
F-L-Z
aufweist, worin F eine funktionelle Gruppe enthält, die mit der funktionellen Gruppe des Teilchens reaktiv ist, Z eine ethylenisch ungesättigte Einheit enthält und L eine Gruppe ist, die F und Z verknüpft.

5. Pulverbeschichtungszusammensetzung nach Anspruch 4, worin F gleich Si(OR)₃- ist, L gleich -(CH₂)ₙ- ist, R eine Alkylgruppe mit 1 bis 30 Kohlenstoffatomen ist und n gleich 0 bis 5 ist.

6. Pulverbeschichtungszusammensetzung nach Anspruch 5, worin Z Acrylat- oder Methacrylatfunktionalität enthält.

7. Pulverbeschichtungszusammensetzung nach Anspruch 6, wobei die modifizierende Verbindung (Meth)acryloxypropyltrialkoxysilan ist.

8. Pulverbeschichtungszusammensetzung nach Anspruch 7, worin das Trialkoxy Trimethoxy ist.

9. Pulverbeschichtungszusammensetzung nach Anspruch 1, wobei weniger als 10% der funktionellen Gruppen auf dem Teilchen mit modifizierenden Gruppen umgesetzt sind.

10. Pulverbeschichtungszusammensetzung nach Anspruch 1, wobei das Teilchen ein Siliciumdioxidteilchen ist.

11. Pulverbeschichtungszusammensetzung nach einem der Ansprüche 1-10, worin (a) zusätzlich ein Stabilisierungsmittel enthält.

12. Pulverbeschichtungszusammensetzung nach Anspruch 11, wobei das Stabilisierungsmittel 5-20 Gew.-% der Zusammensetzung ausmacht, die Teilchen 75-94 Gew.-% der Zusammensetzung ausmachen und die modifizierende Verbindung 1-5 Gew.-% der Zusammensetzung ausmacht, wobei die Gewichtsprozentangaben sich auf das Gesamtgewicht der Zusammensetzung beziehen.

13. Pulverbeschichtungszusammensetzung nach Anspruch 1, wobei das zusätzliche Monomer Styrol ist.

14. Pulverbeschichtungszusammensetzung nach Anspruch 1, wobei das zusätzliche Monomer Isobornylmethacrylat ist.

15. Pulverbeschichtungszusammensetzung nach Anspruch 1, wobei dieses Polymer ein Acrylpolyol ist.

16. Pulverbeschichtungszusammensetzung nach Anspruch 1, wobei der Gewichtsprozentanteil der Teilchen in der Beschichtung 0,01-30,0 beträgt, wobei die Gewichtsprozentangabe sich auf das Gesamtfeststoffgewicht der Beschichtung bezieht.

17. Substrat, beschichtet mit der Pulverbeschichtungszusammensetzung nach Anspruch 16.

18. Substrat nach Anspruch 17, wobei dieses Substrat metallisch ist.

19. Substrat nach Anspruch 17, wobei dieses Substrat polymer ist.

20. Substrat nach Anspruch 17, worin eine oder mehrere zusätzliche Schichten zwischen dem Substrat und der Beschichtung angeordnet sind.

21. Verfahren zur Verbesserung der Kratz- und/oder Abriebbeständigkeit eines beschichteten Substrats, umfassend Aufbringen als wenigstens eine der Beschichtungen die Beschichtungszusammensetzung nach Anspruch 1 auf wenigstens einen Teil des Substrats.

## Revendications

1. Composition de revêtement en poudre comprenant une résine filmogène comprenant un polymère formé à partir de réactifs comprenant :
(a) une particule chimiquement modifiée comprenant :
i) une particule ayant un groupe fonctionnel, et
ii) un groupe modificateur réagissant avec le groupe fonctionnel de la particule, où le groupe modificateur a au moins un fragment à insaturation éthylénique ; et
(b) au moins un monomère additionnel comprenant un groupe fonctionnel qui est polymérisable avec le fragment à insaturation éthylénique de la particule modifiée du composant (a), où
la particule chimiquement modifiée (a) possède moins de 1,0 mmol d'insaturation réactive par gramme de particule.

2. Composition de revêtement en poudre selon la revendication 1, dans laquelle le fragment à insaturation éthylénique est dérivé de l'acrylate ou du méthacrylate.

3. Composition de revêtement en poudre selon la revendication 1, dans laquelle le groupe modificateur a un fragment à insaturation éthylénique.

4. Composition de revêtement en poudre selon la revendication 1, dans laquelle le groupe modificateur a la structure :
F-L-Z
où F comprend un groupe fonctionnel réactif avec le groupe fonctionnel sur la particule ; Z comprend un fragment à insaturation éthylénique ; et L est un groupe qui lie F et Z.

5. Composition de revêtement en poudre selon la revendication 4, dans laquelle F est Si (OR)₃- ; L est -(CH₂)ₙ-; R est un groupe alkyle ayant de 1 à 30 atomes de carbone ; et n vaut 0 à 5.

6. Composition de revêtement en poudre selon la revendication 5, dans laquelle Z comprend une fonctionnalité acrylate ou méthacrylate.

7. Composition de revêtement en poudre selon la revendication 6, dans laquelle le composé modificateur est le (méth)acryloxypropyltrialcoxysilane.

8. Composition de revêtement en poudre selon la revendication 7, dans laquelle le trialcoxy est le triméthoxy.

9. Composition de revêtement en poudre selon la revendication 1, dans laquelle moins de 10 % des groupes fonctionnels sur la particule réagissent avec les groupes modificateurs.

10. Composition de revêtement en poudre selon la revendication 1, dans laquelle la particule est une particule de silice.

11. Composition de revêtement en poudre selon l'une quelconque des revendications 1 à 10, dans laquelle (a) comprend en outre un agent de stabilisation.

12. Composition de revêtement en poudre selon la revendication 11, dans laquelle l'agent de stabilisation constitue de 5 à 20 % en poids de la composition, la particule constitue de 75 à 94 % en poids de la composition et le composé modificateur constitue de 1 à 5 % en poids de la composition, le % en poids étant basé sur le poids total de la composition.

13. Composition de revêtement en poudre selon la revendication 1, dans laquelle le monomère additionnel est le styrène.

14. Composition de revêtement en poudre selon la revendication 1, dans laquelle le monomère additionnel est le méthacrylate d'isobornyle.

15. Composition de revêtement en poudre selon la revendication 1, dans laquelle ledit polymère est un polyol acrylique.

16. Composition de revêtement en poudre selon la revendication 1, dans laquelle le % en poids de la particule dans le revêtement est de 0,01 à 30,0, le % en poids étant basé sur le poids total de la composition.

17. Substrat enduit avec la composition de revêtement en poudre selon la revendication 16.

18. Substrat selon la revendication 17, dans lequel ledit substrat est métallique.

19. Substrat selon la revendication 17, dans lequel ledit substrat est polymère.

20. Substrat selon la revendication 17, dans lequel une ou plusieurs couches additionnelles sont placées entre le substrat et le revêtement.

21. Procédé d'amélioration de la résistance aux éraflures et/ou aux rayures d'un substrat enduit comprenant l'application, comme au moins l'un de revêtements, de la composition de revêtement selon la revendication 1 à au moins une partie du substrat.
